# EUROPÄISCHE PATENTANMELDUNG

(11) **EP 1 283 359 A1**
(43) Veröffentlichungstag der Anmeldung: **12.02.2003**
(21) Anmeldenummer: 01119306.7
(22) Anmeldetag: 10.08.2001
(51) Int. Cl.: F03D 11/02, F03D 9/00

(54) **Windkraftanlage zur Erzeugung elektrischer Energie**

(71) Anmelder: RWE Piller GmbH, 37520 Osterode am Harz (DE)
(72) Erfinder: Bauch-Panetzky, Dieter, Dipl.-Ing., 97422 Schweinfurt (DE); Seidel, Detlev, Dr.-Ing., 37085 Göttingen (DE); Ueffing, Norbert, Dipl.-Ing., 37520 Osterode am Harz (DE); Okla, Omar, Dr.-Ing., 13357 Berlin (DE); Reinke, Eva, 37431 Bad Lauterberg (DE)
(74) Vertreter: Patentanwälte Rehberg + Hüppe

(57) **Zusammenfassung**

Eine Windkraftanlage dient zur Erzeugung elektrischer Energie und weist einen vom Wind angetriebenen Rotor, ein von dem Rotor (5) antreibbares Getriebe (18, 22) und einen von dem Getriebe antreibbaren Generator (27) auf. Das Getriebe (18, 22)) weist eine Getriebestufe (22) mit kontinuierlich variabler Übersetzung auf, und es ist eine Steuerung (23) vorgesehen, die die variable Übersetzung der Getriebestufe (22) so einstellt, dass die Drehzahl des Generators (27) trotz variabler Drehzahl des Rotors (5) einen vorgegebenen Wertebereich nicht verlässt.

## Beschreibung

Die Erfindung bezieht sich auf eine Windkraftanlage zur Erzeugung elektrischer Energie, mit einem vom Wind angetriebenen Rotor, mit einem von dem Rotor antreibbaren Getriebe und mit einem von dem Getriebe antreibbaren Generator.

Mit Windkraftanlagen ist es möglich, nahezu unbegrenzt zur Verfügung stehende Windenergie in elektrische Energie umzuwandeln. Bei dem derzeitigen Stand der Technik von Solaranlagen ist dies in den geographischen Breiten Deutschlands derzeit die einzige Möglichkeit große Mengen an elektrischer Energie wirtschaftlich zu erzeugen.

Eine starke Tendenz bei Windkraftanlagen geht zu immer größeren Einheiten. Konkret werden Windkraftanlagen angestrebt, die unter Verwendung eines einzigen Rotors elektrische Leistungen im Bereich von mehr als 1 bis typischerweise 10 MW erzeugen können. Hintergrund dieser Entwicklung ist unter anderem, dass sich die für Windkraftanlagen verfügbaren Standorte, welche leicht zugänglich sind und nur geringen Installationsaufwand erfordern, zunehmend erschöpfen. Die Erschließung gänzlich neuer Standorte, wie beispielsweise im Off-Shore-Bereich macht aber nur dann Sinn, wenn je Windkraftanlage relativ große Mengen elektrischer Energie erzeugt werden, die den dort notwendigen Investitionsaufwand rechtfertigen.

Ein Grundproblem bei allen Windkraftanlagen ist die Anbindung an Stromnetze, wozu die erzeugte elektrische Energie mit definierter Frequenz und Spannung abgegeben werden muss. Ein Problem ist hier insofern gegeben, als dass die Geschwindigkeit des den Rotor antreibenden Winds stark variiert, so dass es auch durch unterschiedliche Ausrichtung der Achse des Rotors zur Windrichtung, d. h. eine Stall-Regelung, und durch unterschiedliche Stellung der Rotorblätter um ihre Längsachsen, d. h. eine Pitch-Regelung, in aller Regel nicht möglich ist, die Drehzahl des Rotors konstant zu halten. So müssen zusätzliche Maßnahmen ergriffen werden, um bei einer variablen Drehzahl des Rotors zu einer Ausgabe elektrischer Energie mit konstanter Frequenz und Spannung zu kommen.

Bei einer bekannten Windkraftanlage geht man die Lösung dieses Problems so an, dass der Rotor ohne Zwischenschaltung eines Getriebes direkt an den Generator angeschlossen wird und dass die von dem Generator erzeugte Spannung durch eine Leistungselektronik umgeformt wird, um sie netzfähig zu machen. Dabei müssen aber 100 % der elektrischen Leistung über die Leistungselektronik in das Netz eingespeist werden. D. h., die Leistungselektronik wird mit zunehmender elektrischer Leistung der Windkraftanlage extrem aufwändig.

Bei einer Windkraftanlage der eingangs beschriebenen Art wird die Drehzahl des Rotors durch ein Getriebe mit fester Übersetzung so übersetzt, dass die auftretenden Drehzahlen am Ausgang des Getriebes mit dem Arbeitsbereich einer doppelt gespeisten Asynchronmaschine als Generator zusammenfallen. Bei dieser Anordnung wird von dem Generator eine Wechselspannung mit der Netzfrequenz erzeugt. Es muss aber immer noch etwa ein Drittel der in das Netz eingespeisten elektrischen Leistung über eine Leistungselektronik geführt werden, welche mit der Rotorwicklung des Geenerators verbunden ist. Aus diesem Grund ist auch diese bekannte Windkraftanlage gerade bei großen elektrischen Leistungen sehr aufwändig.

Bei Anlagen zur unterbrechungsfreien Stromversorgung (USV-Anlagen) mit einem Schwungrad als Energiezwischenspeicher und einem mit dem Schwungrad verbindbarem Generator ist es aus der WO 01/28065 bekannt, zwischen das Schwungrad und dem Generator ein Leistungsverzweigungsgetriebe mit einem Getriebeabzweig zu schalten und an dem Getriebeabzweig eine elektrische Maschine anzuordnen. Durch die steuerbare Drehzahl der elektrischen Maschine kann die Übersetzung eines Leistungsverzweigungsgetriebes zwischen dem Schwungrad und dem Generator so gesteuert werden, dass trotz der bei der Energieentnahme kontinuierlich fallenden Drehzahl des Schwungrads der Generator mit konstanter Drehzahl betrieben wird und so trotz einfachen Aufbaus einen Wechselstrom mit konstanter Frequenz abgeben kann. Eine Leistungselektronik wird dabei nur zur Ansteuerung der elektrischen Maschine an dem Getriebeabzweig benötigt, und der Generator kann von besonders einfachem Aufbau sein. Bei der bekannten USV-Anlage werden aber nur kurzzeitig relevante Drehmomente über das Leistungsverzweigungsgetriebe übertragen, und zwar immer nur dann, wenn das Schwungrad entladen bzw. durch Betrieb des Generators und der elektrischen Maschine als Motor wieder mit kinetischer Energie aufgeladen wird. Im Stand-by-Betrieb der USV-Anlage werden über das Leistungsverzweigungsgetriebe nur geringe Drehmomente übertragen, um Reibungsverluste auszugleichen.

Der Erfindung liegt die Aufgabe zugrunde, eine Windkraftanlage der eingangs beschriebenen Art aufzuzeigen, die von ihrer Grundkonstruktion her besonders gut an die schwankenden Drehzahlen des Rotors angepasst ist.

Erfindungsgemäß wird diese Aufgabe bei einer Windkraftanlage zur Erzeugung elektrischer Energie der eingangs beschriebenen Art dadurch gelöst, dass das Getriebe eine Getriebestufe mit kontinuierlich variabler Übersetzung aufweist und dass eine Steuerung vorgesehen ist, die die variable Übersetzung der Getriebestufe so einstellt, dass die Drehzahl des Generators trotz variabler Drehzahl des Rotors einen vorgegebenen Wertebereich nicht verlässt.

Bei der neuen Windkraftanlage ist keine feste Kopplung zwischen der Drehzahl des Rotors und der Drehzahl des Generators mehr gegeben. Vielmehr ermöglicht es die variable Übersetzung der zwischengeschalteten Getriebestufe, dass die Drehzahl des Generators trotz unterschiedlicher Drehzahlen des Rotors gleich bleibt. Hiermit ist ein zusätzlicher Steuerungsparameter für die Optimierung der Windkraftanlage unter unterschiedlichen Betriebsbedingungen gegeben. Die Windkraftanlage kann und wird üblicherweise zusätzlich durch Einstellung der Orientierung der Achse des Rotors (Stall-Regelung) und der Rotorblätter zur Achse des Rotors und um ihre Längsachse (Pitch-Regelung) unter den jeweiligen Betriebsbedingungen optimiert werden. Dabei kann die Einstellung des Rotors bei der neuen Windkraftanlage gezielt so vorgenommen werden, dass sie dazu beiträgt, die Drehzahl des Rotors unabhängig von den jeweiligen Betriebsbedingungen der Windkraftanlage etwa konstant zu halten, so dass durch die Getriebestufen mit variabler Übersetzung nur noch kleinere Drehzahlschwankungen des Rotors auszugleichen sind. Je nach Typ des Generators muss im übrigen seine Drehzahl durch die variable Übersetzung der vorgeschalteten Getriebestufe nicht unbedingt auf einen Wert konstant gehalten werden. Es kann ausreichen, die Drehzahl des Generators in einem Wertebereich zu halten, dessen oberer Grenzwert einige 10 % über dessen unterem Grenzwert liegt. Auch hierdurch sind bereits erhebliche Vereinfachungen auf Seiten des Generators bei der neuen Windkraftanlage möglich.

Die Getriebestufen mit variabler Übersetzung der neuen Windkraftanlage ist vorzugsweise ein Leistungsverzweigungsgetriebe mit einem Getriebeabzweig.

Beispielsweise kann das Leistungsverzweigungsgetriebe ein Planetengetriebe sein. In Frage kommen ein- aber auch mehrstufige Planetengetriebe. Bei der Auswahl des Leistungsverzweigungsgetriebes ist darauf zu achten, dass bei der neuen Windkraftanlage immer die gesamte mechanische Energie des Rotors über das Leistungsverzweigungsgetriebe übertragen wird. D. h., das Leistungsverzweigungsgetriebe muss für eine Dauerbelastung mit Volllast ausgelegt sein.

Der Getriebeabzweig des Leistungsverzweigungsgetriebes der neuen Windkraftanlage kann eine Hohlwelle aufweisen, die eine Eingangoder Ausgangswelle der Getriebestufe mit variabler Übersetzung umgibt. Ein solcher Hohlwellenaufbau ist dann von Vorteil, wenn eine besonders kompakte Anordnung der dem Rotor nachgeschalteten mechanischen und elektromechanischen Bauteile der Windkraftanlage um die Achse des Rotors erreicht werden soll.

Bei der neuen Windkraftanlage ist an dem Getriebeabzweig vorzugsweise eine elektrische Maschine mit variabler Drehzahl angeschlossen. Grundsätzlich könnte dort auch jedes andere Mittel angeordnet sein, mit dem die Drehzahl des Getriebeabzweigs zumindest innerhalb bestimmter Grenzen auf verschiedene vorgebbare Werte festgelegt werden kann.

Die elektrische Maschine an dem Getriebeabzweig kann einen Hohlrotor aufweisen, der an die Hohlwelle der Getriebestufe mit variabler Übersetzung angeschlossen ist. Auch dies steht wieder im Zusammenhang mit einem besonders kompakten Aufbau der neuen Windkraftanlage um die Achse des Rotors.

Die Steuerung kann die elektrische Maschine als Motor und/oder Generator ansteuern. Bei einer Ansteuerung der elektrischen Maschine als Motor wird ein Teil der elektrischen Energie, die mit dem Generator erzeugt wird, für den Betrieb der elektrischen Maschine verwendet, um die Drehzahl des Generators in einem gewünschten Bereich anzuheben. Bei einer Ansteuerung der elektrischen Maschine als Generator wird die anfallende mechanische Energie teilweise durch den Generator und teilweise durch die elektrische Maschine in elektrische Energie umgewandelt. Es versteht sich, dass der abdeckbare Bereich der Drehzahlen des Rotors beim Halten der Drehzahl des Generators in dem vorgegebenen Wertebereich besonders groß ist, wenn die Steuerung die elektrische Maschine wahlweise sowohl als Motor als auch als Generator ansteuern kann, wobei sich zwischen diesen beiden Arten der Ansteuerung eine Drehrichtungsumkehr der elektrischen Maschine ergibt.

Die elektrische Maschine muss so ausgebildet sein, dass ihre Drehzahl vorgegeben werden kann, um die Übersetzung der Getriebestufe mit variabler Übersetzung zwischen dem Rotor und dem Generator auf die aktuellen Bedürfnisse abzustimmen. Geeignet sind dabei durchaus unterschiedliche elektrische Maschinen, einschließlich Synchron- und Asynchronmaschinen sowie Gleich- und Wechselstrommaschinen. Der jeweilige Maschinentyp ist in Abhängigkeit von dem auftretenden Drehzahlbereich an dem Getriebeabzweig auszuwählen. Soweit die elektrische Maschine einen Hohlrotor aufweist, um einen besonders kompakten Aufbau der Windkraftanlage um die Achse des Rotors zu erreichen, handelt es sich bei ihr sicher um eine Sondermaschine. Die notwendige elektrische Leistung dieser Sondermaschine ist aber begrenzt. Daneben können auch herkömmliche elektrische Maschinen ohne Hohlrotor bei der neuen Windkraftanlage eingesetzt werden.

Der Generator der neuen Windkraftanlage kann ein Wechselstromgenerator sein. Insbesondere kann es sich um einen bezüglich seiner Frequenz ungesteuerten Wechselstromgenerator handeln, der mit fester Drehzahl betrieben wird. Dabei muss der vorgegebene Wertebereich für die Drehzahl des Generators auf einen Wert mit einer Toleranzumgebung zusammenschrumpfen.

Der Generator kann aber auch ein Gleichstromgenerator sein. Auch ein Gleichstromgenerator ist nicht in der Lage, sehr stark schwankende Eingangsdrehzahlen problemlos zu verkraften.

Vielmehr ist für die Erzielung eines guten Wirkungsgrads das Einhalten eines bestimmten Wertebereichs sinnvoll, indem dann durch die elektrische Ansteuerung des Gleichstromgenerators eine Optimierung betrieben werden kann.

Die Erfindung wird im folgenden anhand von Ausführungsbeispielen näher erläutert und beschrieben, dabei zeigt
- Fig. 1: eine Windkraftanlage in einer Seitenansicht auf ihren Rotor,
- Fig. 2: eine Draufsicht auf den Rotor der Windkraftanlage gemäß Fig. 1,
- Fig. 3: den inneren Aufbau der Windkraftanlage gemäß den Fig. 1 und 2 hinter dem Rotor,
- Fig. 4: ein Kraftflussschema zu der Windkraftanlage gemäß den Figuren 1 bis 3,
- Fig. 5: ein Kraftflussschema zu einer zweiten, abgewandelten Ausführungsform der Windkraftanlage;
- Fig. 6: ein Blockschaltbild zu der Windkraftanlage mit dem Kraftflussschema gemäß Fig. 4 und
- Fig. 7: ein Blockschaltbild zu einer anderen Ausführungsform der Windkraftanlage mit einem Gleichstromgenerator.

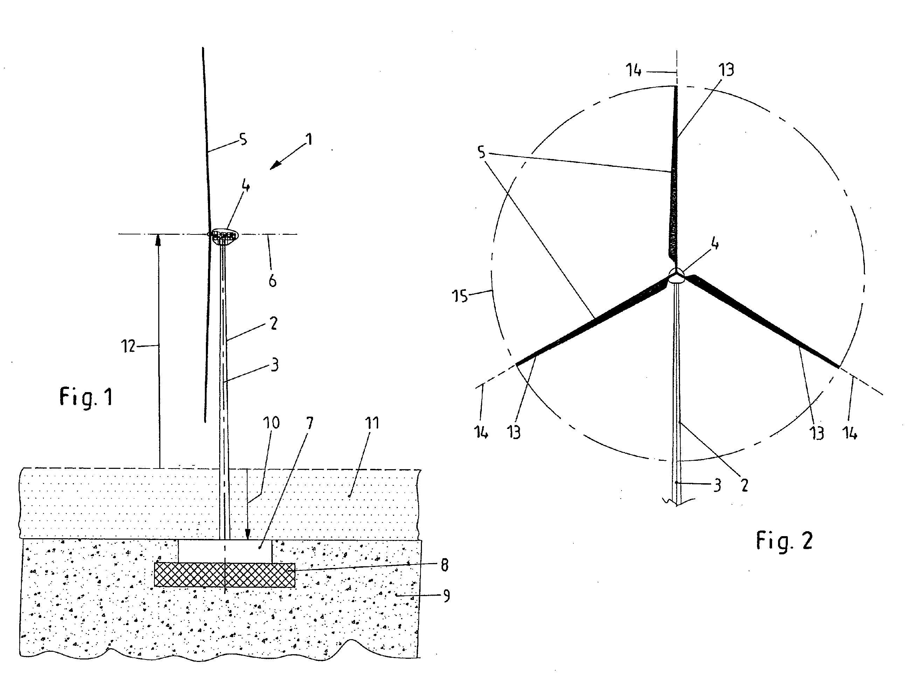

Die in Fig. 1 wiedergegebene Windkraftanlage 1 weist einen Mast 2 auf, der einen um eine vertikale Achse 3 drehbar gelagerten Kopf 4 trägt. An dem Kopf 4 ist wiederum ein Rotor 5 um eine etwa horizontale Achse 6 drehbar gelagert. Der Mast 2 ist über einen Fuß 7 auf einem Fundament 8 befestigt. Das Fundament 8 verankert in der Ausführungsform gemäß Fig. 1 die Windkraftanlage 1 im Meeresboden 9, wobei die Tiefe 10 des Wassers 11 über dem Meeresboden 9 etwa 30 m beträgt. Die Höhe 12 des Kopfes 4 bzw. der Achse 6 des Rotors 5 über dem Wasser 11 beträgt ca. 100 m. D. h., es handelt sich um eine relativ große Windkraftanlage, welche für eine Off-Shore-Anwendung vorgesehen und für eine ungefähre Leistung von 6 MW ausgelegt ist.

Fig. 2 zeigt von vorne den Mast 2, den Kopf 4 und den Rotor 5 der Windkraftanlage 1 gemäß Fig. 1. Nicht wiedergegeben sind die Teile der Windkraftanlage 1, die sich unter Wasser befinden. Zu erkennen ist hier, dass der Rotor 5 insgesamt drei Rotorblätter 13 aufweist. Der Anstellwinkel der Rotorblätter 13 ist jeweils um eine Längsachse 14 der Rotorblätter 13 veränderbar. Der Kreisbogen 15, der von den Spitzen der Rotorblätter 13 gezeichnet wird, weist einen Durchmesser von 160 m auf.

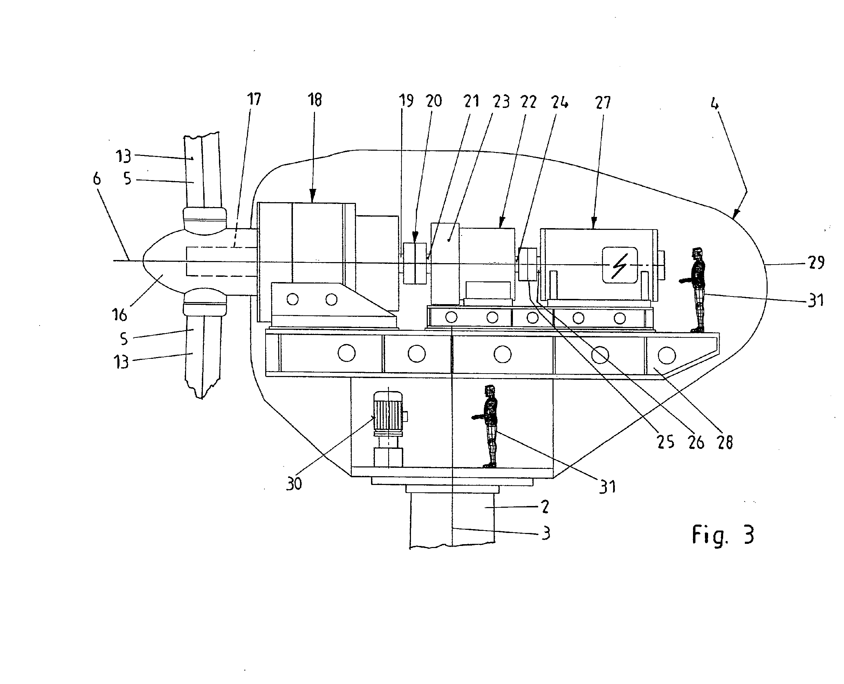

In Fig. 3 ist der Kopf 4 der Windkraftanlage 1 gemäß den Fig. 1 und 2 in einem schematischen Querschnitt und in gegenüber den Fig. 1 und 2 vergrößerter Darstellung wiedergegeben. Die mit den Rotorblättern 13 um die Achse 6 des Rotors 5 umlaufende Nabe 16 des Rotors 5 ist auf einer Eingangswelle 17 einer Getriebeeinheit 18 gelagert. Die Getriebeeinheit 18 erhöht die Eingangsdrehzahl des Rotors 5 und gibt diese erhöhte Drehzahl an eine Ausgangswelle 19 ab. Die Ausgangswelle 19 ist über eine Kupplung 20 an eine Eingangswelle 21 eines Leistungsverzweigungsgetriebes 22 anschließbar, an dessen Abzweig 40 eine hier in Koaxialbauweise ausgeführte elektrische Maschine 23 vorgesehen ist. Das Leistungsverzweigungsgetriebe 22 nivelliert zwischen seiner Eingangswelle 21 und seiner Ausgangswelle 24 Schwankungen in der Drehzahl aufgrund unterschiedlicher Anströmung des Rotors 5 und gibt über eine Kupplung 25 eine konstante Drehzahl an die Eingangswelle 26 eines Generators 27 ab. D. h. der Generator 27 wird unabhängig von der Anströmung des Rotors 5 mit konstanter Drehzahl betrieben. Die Bauteile 18 bis 27 sind auf einer Plattform 28 innerhalb einer Verkleidung 29 des Kopfs 4 gelagert. Unterhalb der Plattform 28 befindet sich die Lagerung des Kopfs 4 an dem Mast 2 einschließlich eines Stellmotors 30, um den Kopf 4 mit dem Rotor 5 um die vertikale Achse 3 gegenüber dem Mast 2 zu verdrehen. Die in Fig. 3 wiedergegebenen Männchen 31 besitzen menschliche Größe und dienen zur Veranschaulichung der Ausmaße des Kopfs 4 und seiner Bestandteile in der vorliegenden Ausführungsform.

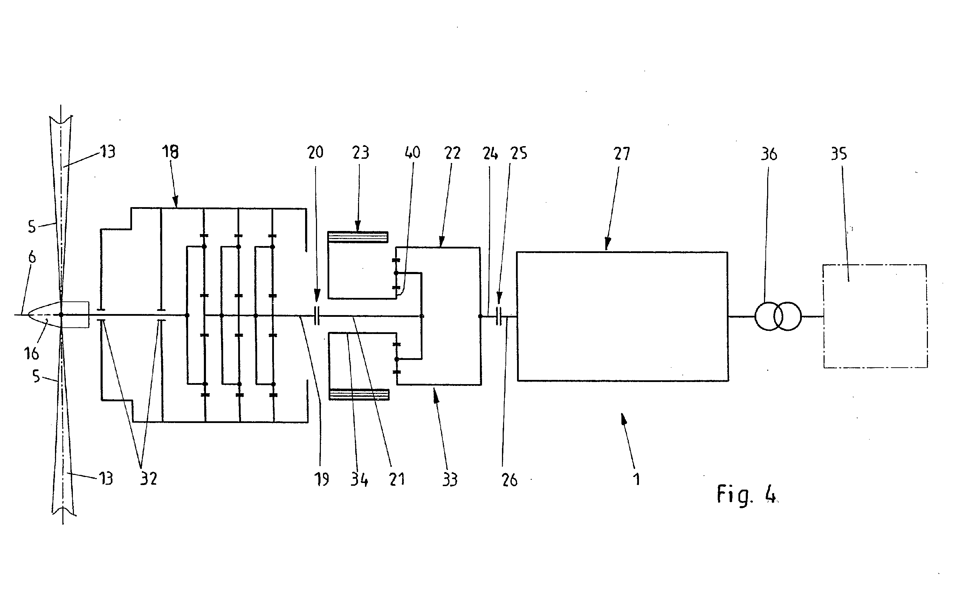

Das in Fig. 4 dargestellte Kraftflussschema gehört zu der Windkraftanlage 1 mit dem inneren Aufbau des Kopfs 4 gemäß Fig. 3. Mit der Getriebeeinheit 18, die hier als mehrstufiges Planetengetriebe ausgebildet ist, wird die Drehzahl der Nabe 16 des Rotors 5 bezüglich der Ausgangswelle 19 an der Kupplung 20 vervierundsechzigfacht. Gleichzeitig dient die Getriebeeinheit 18 zur Lagerung des Rotors 5 und zur Stabilisierung der Achse 6 des Rotors 5, wozu Lager 32 vorgesehen sind. Das Leistungsverzweigungsgetriebe 22 ist ebenfalls als Planetengetriebe 33 ausgebildet. Dabei ist jedoch keiner der drei Teile des Planetengetriebes starr abgestützt. Vielmehr erfolgt eine Verzweigung des Drehmoments einmal zu der Ausgangswelle 24 an der Kupplung 25 und einmal zu dem Abzweig mit der elektrischen Maschine 23. Die elektrische Maschine 23 weist einen um die Eingangswelle 21 des Leistungsverzweigungsgetriebes 22 herum angeordneten Hohlrotor 34 auf und ist koaxial zu dieser Eingangswelle 21 aufgebaut. Die Leistungsverzweigung ist so gewählt, dass die elektrische Maschine 23 auf etwa ein Fünftel der Leistung des Generators 27 kommt. Der Generator 27 ist über eine Netzkupplung 36, beispielsweise einen Transformator, an ein Stromnetz 35 angeschlossen. Die Ansteuerung bzw. die Anbindung der elektrischen Maschine 23 von bzw. an das Netz 35 ist in Fig. 4 nicht wiedergegeben.

Unter bestimmten Betriebsbedingungen werden bei einer Windkraftanlage mit dem Kraftflussschema gemäß Fig. 4 folgende Betriebsdaten erreicht. Der Rotor dreht sich mit 20 Umdrehungen pro Minute. Das Drehmoment des Rotors um die Achse 6 beträgt dabei 2,5 *10⁶ Newtonmeter. Die Getriebeeinheit 18 erhöht die Drehzahl an ihrer Ausgangswelle 19 auf 1.280 Umdrehungen pro Minute bei einem Drehmoment von 39.000 Newtonmeter. In dem Leistungsverzweigungsgetriebe wird von der ankommenden mechanischen Leistung 1 MW bei 800 Umdrehungen pro Minute und 12.000 Newtonmeter auf die elektrische Maschine 23 umgeleitet und von dieser als Generator in elektrische Energie umgewandelt. 5 MW werden bei 1.500 Umdrehungen pro Minute und 32.000 Newtonmeter auf den Generator 27 gegeben und von diesem in elektrische Energie umgewandelt. Durch zusätzliche Getriebeeinheiten oder eine Mehrstufigkeit des Planetengetriebes 33 kann die Verzweigung der mechanischen Leistung durch das Leistungsverzweigungsgetriebe 22 in anderer Weise ausgeführt werden. Hierdurch kann beispielsweise eine Anpassung an bestimmte günstige Drehzahlbereiche für die elektrische Maschine 23 vorgenommen werden.

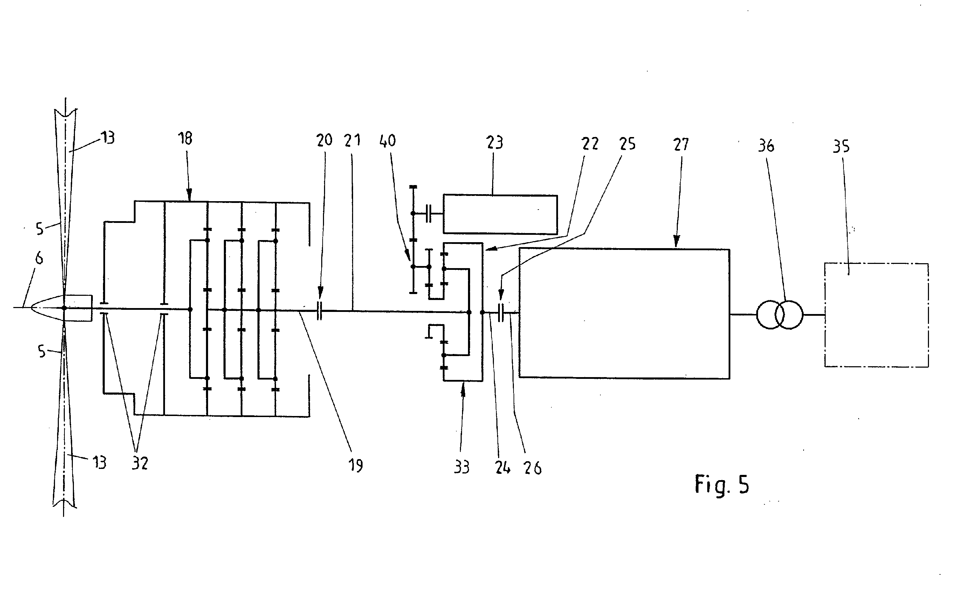

Die in Fig. 5 anhand ihres Kraftflussschemas gezeigte Ausführungsform der elektrischen Maschine 1 unterscheidet sich von derjenigen gemäß Fig. 4 dadurch, dass die elektrische Maschine 23 keine Sondermaschine ist, die koaxial um die Eingangswelle 21 des Leistungsverzweigungsgetriebes 22 aufgebaut ist. Vielmehr ist die elektrische Maschine 23 gemäß Fig. 5 parallel zu der Achse 6 ausgerichtet und oberhalb des Planetengetriebes 33, der Kupplung 25 und von Teilen des Generators 27 angeordnet.

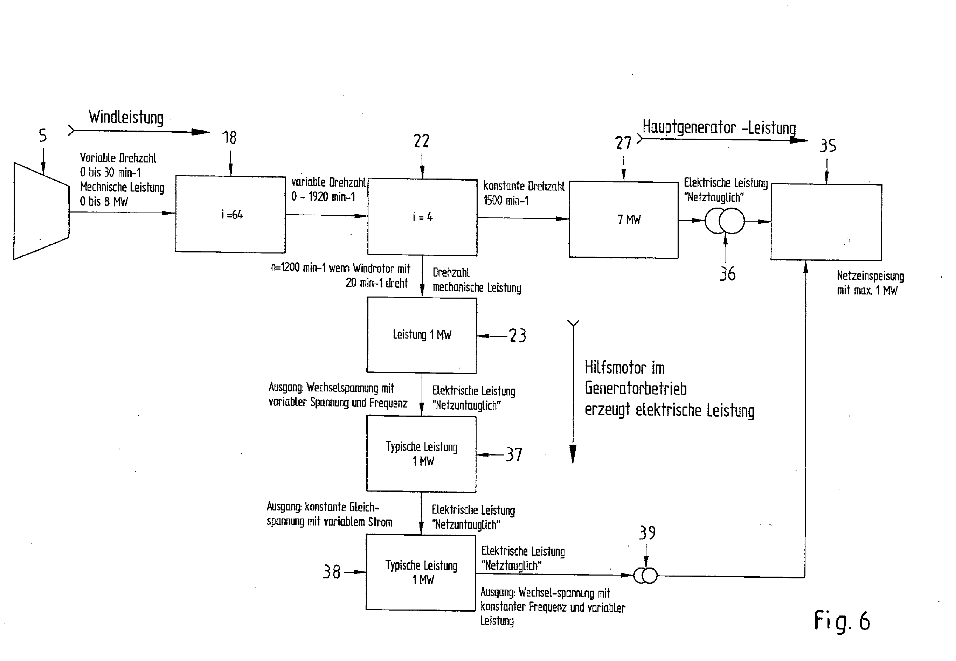

Fig. 6 gibt ein Blockschaltbild zur Funktionsweise der Windkraftanlage 1 mit dem Leistungsverzweigungsgetriebe 22 wieder, wobei in dem Blockschaltbild typische Zahlenwerte zu dem Betrieb der Windkraftanlage 1 angegeben sind. Die ankommende mechanische Leistung des Rotors von 0 bis 8 MW weist eine variable Drehzahl von 0 bis 30 Umdrehungen pro Minute auf. Die Drehzahl wird in der Getriebeeinheit 18 vervierundsechzigfacht, so dass sich eine variable Drehzahl von 0 bis 1.920 Umdrehungen pro Minute ergibt. In dem Leistungsverzweigungsgetriebe, das seinerseits eine Übersetzung von 4 aufweist, wird die ankommende Leistung so verzweigt, dass an dem Generator 27, der als Synchrongenerator ausgebildet ist, bis zu 7 MW mechanische Leistung konstanter Drehzahl von 1.500 Umdrehungen pro Minute abgegeben werden. Diese mechanischen Leistungen werden von dem Generator 27 in elektrische Leistung umgewandelt, die unmittelbar netztauglich ist und über die Netzkupplung 36 in das Netz 35 eingespeist wird. Bei nur kleinen Leistungen kann es auch sinnvoll sein, den Synchrongenerator ganz anzuhalten und elektrische Energie nur über die elektrische Maschine 23 zu gewinnen. Wenn der Generator 27 läuft, werden über das Leistungsverzweigungsgetriebe 22 variable Anteile der mechanischen Energie auf die elektrische Maschine 23 umgeleitet, um die Drehzahl des Generators 27 konstant zu halten. Dabei gibt die elektrische Maschine 23 eine Wechselspannung mit variabler Spannung und Frequenz aus, die noch netzuntauglich ist. Durch einen Stromrichter 37 wird hieraus eine konstante Gleichspannung mit variablem Strom gemacht, die immer noch netzuntauglich ist, bevor sie durch einen Wechselrichter 38 in eine Wechselspannung gewünschter Frequenz umgewandelt wird, welche dann durch eine Netzkupplung 39 in das Netz 35 eingespeist wird. Dabei kann der Energiefluss auch umgekehrt werden, d. h. über das Netz bzw. direkt durch den Generator 27 wird elektrische Energie bereitgestellt, mit der die elektrische Maschine 23 als Motor betrieben wird, um die Drehzahl des Generators 27 konstant zu halten. Dabei wird dann ein Teil der von dem Generator 27 erzeugten elektrischen Energie wieder in mechanische Energie umgewandelt.

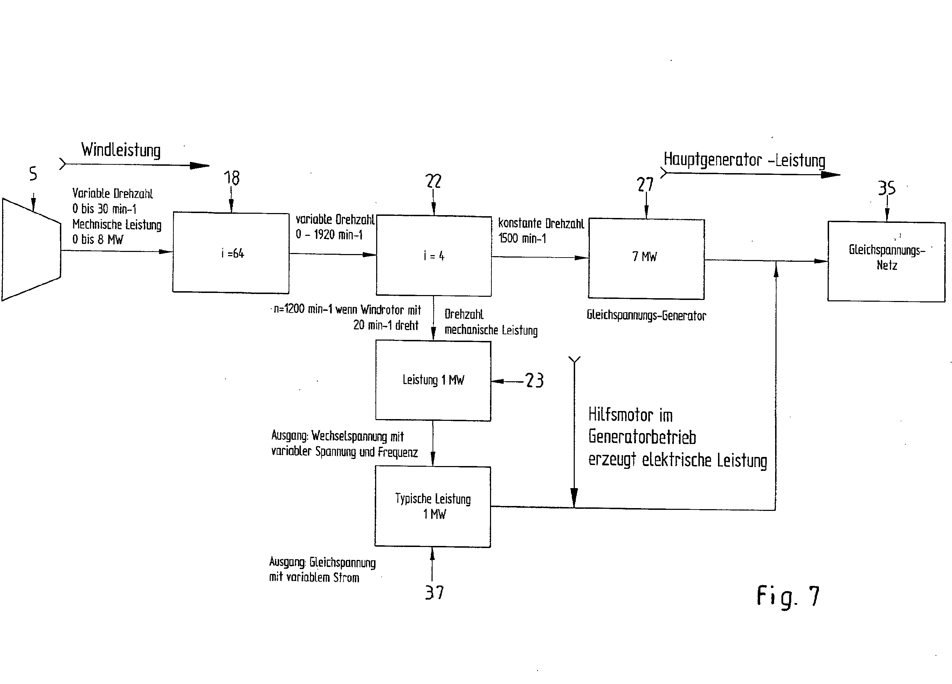

Während Fig. 6 davon ausgeht, dass der Generator 27 ein Wechselstromgenerator ist, handelts es sich bei dem Generator 27 gemäß Fig 7 um einen Gleichstromgenerator handeln. Auch ein Gleichstromgenerator wird vorzugsweise in einem begrenzten Drehzahlbereich betrieben, um einen vernünftigen Wirkungsgrad zu erzielen. Dieser Drehzahlbereich kann mit Hilfe der elektrischen Maschine 23 leicht eingehalten werden. Hierzu bedarf es keiner besonders aufwändigen Steuerung, da keine konstante Drehzahl für den Generator 27 erforderlich ist. Zudem kann die von dem Generator 27 erzeugte Gleichspannung auf Seiten der elektrischen Maschine 23 direkt mit der Gleichspannung aus dem Stromrichter 37 zusammengeführt werden. Mit anderen Worten entfällt der Wechselrichter 38.

### BEZUGSZEICHENLISTE

- 1 -: Windkraftanlage
- 2 -: Mast
- 3 -: Achse
- 4 -: Kopf
- 5 -: Rotor
- 6 -: Achse
- 7 -: Fuß
- 8 -: Fundament
- 9 -: Meeresboden
- 10 -: Tiefe

- 11 -: Wasser
- 12 -: Höhe
- 13 -: Rotorblatt
- 14 -: Längsachse
- 15 -: Kreisbogen
- 16 -: Nabe
- 17 -: Eingangswelle
- 18 -: Getriebeeinheit
- 19 -: Ausgangswelle

- 20 -: Kupplung
- 21 -: Eingangswelle
- 22 -: Leistungsverzweigungsgetriebe
- 23 -: elektrische Maschine
- 24 -: Ausgangswelle
- 25 -: Kupplung
- 26 -: Eingangswelle
- 27 -: Generator
- 28 -: Plattform
- 29 -: Verkleidung
- 30 -: Stellmotor
- 31 -: Männchen
- 32 -: Lager
- 33 -: Planetengetriebe
- 34 -: Hohlrotor
- 35 -: Netz
- 36 -: Netzkupplung
- 37 -: Stromrichter
- 38 -: Wechselrichter
- 39 -: Netzkupplung
- 40 -: Getriebeabzweig

## Patentansprüche

1. Windkraftanlage zur Erzeugung elektrischer Energie, mit einem vom Wind angetriebenen Rotor, mit einem von dem Rotor antreibbaren Getriebe und mit einem von dem Getriebe antreibbaren Generator, **dadurch gekennzeichnet, dass** das Getriebe eine Getriebestufe mit kontinuierlich variabler Übersetzung aufweist und dass eine Steuerung (23, 37) vorgesehen ist, die die variable Übersetzung der Getriebestufe so einstellt, dass die Drehzahl des Generators (27) trotz variabler Drehzahl des Rotors (5) einen vorgegebenen Wertebereich nicht verlässt.

2. Windkraftanlage nach Anspruch 1, **dadurch gekennzeichnet, dass** die Getriebestufe mit variabler Übersetzung ein Leistungsverzweigungsgetriebe (22) mit einem Getriebeabzweig (40) aufweist.

3. Windkraftanlage nach Anspruch 2, **dadurch gekennzeichnet, dass** das Leistungsverzweigungsgetriebe (22) ein mindestens einstufiges Planetengetriebe (33) ist.

4. Windkraftanlage nach Anspruch 2 oder 3, **dadurch gekennzeichnet, dass** der Getriebeabzweig (40) eine Hohlwelle aufweist, die eine Eingangswelle (21) oder Ausgangswelle der Getriebestufe mit variabler Übersetzung umgibt.

5. Windkraftanlage nach einem der Ansprüche 2 bis 4, **dadurch gekennzeichnet, dass** die Steuerung eine elektrische Maschine mit variabler Drehzahl (23) aufweist, die an den Getriebeabzweig (40) angeschlossen ist.

6. Windkraftanlage nach einem der Ansprüche 3 bis 5, **dadurch gekennzeichnet**, die elektrische Maschine einen Hohlrotor (34) aufweist, der eine Eingangswelle (21) oder Ausgangswelle der Getriebestufe mit variabler Übersetzung umgibt.

7. Windkraftanlage nach Anspruch 5 oder 6, **dadurch gekennzeichnet, dass** die Steuerung die elektrische Maschine (23) als Motor und/oder Generator ansteuert.

8. Windkraftanlage nach einem der Ansprüche 5 bis 7, **dadurch gekennzeichnet, daß** die elektrische Maschine (23) als Gleichstrom- oder als Wechselstrommaschine ausgebildet ist.

9. Windkraftanlage nach einem der Ansprüche 1 bis 8, **dadurch gekennzeichnet, daß** der Generator (7) ein Wechselstromgenerator ist.

10. Windkraftanlage nach einem der Ansprüche 1 bis 8, **dadurch gekennzeichnet, daß** der Generator (27) ein Gleichstromgenerator ist.
